# EUROPEAN PATENT APPLICATION

(11) **EP 2 017 580 A2**
(43) Date of publication of application: **21.01.2009**
(21) Application number: 08158914.5
(22) Date of filing: 25.06.2008
(51) Int. Cl.: G01C 21/36

(54) **Navigation device and navigation program**

(30) Priority: 19.07.2007 JP 2007188751
(71) Applicant: Aisin AW Co., Ltd., Fujii-cho Anjo-shi, Aichi 444-1192 (JP)
(72) Inventor: Sakai, Takamitsu, Okazaki-shi Aichi 444-8564 (JP)
(74) Representative: Vossius & Partner

(57) **Abstract**

A navigation device that performs a specified navigation operation based on map information includes a history information storage unit, a history information extraction unit, and a guidance information output unit. The history information storage unit stores, as history information, guidance object information that was acquired from a navigation operation record. When a branching point in a road and an approach road to the branching point have been designated, the history information extraction unit extracts from the history information storage unit the history information for the guidance object that exists in a direction in which one can proceed from the branching point. The guidance information output unit outputs direction guidance information on a direction in which one can proceed from the branching point and history guidance information that, in association with the direction in the direction guidance information, provides guidance for the guidance object that corresponds to the extracted history information.

## Description

The present invention relates to a navigation device and a navigation program that have a function that provides guidance at a branching point in a road as to a direction in which it is possible to proceed from the branching point.

In the field of vehicle-mounted navigation devices, technologies are already known that, when the current position is close to a branching point such as an intersection or the like, for example, display in a portion of a display screen of a display device a guidance image of the same sort as an actual direction guidance sign that is installed at the branching point (refer to JP-A-2007-085863 and JP-A-2001-311625, for example). In these technologies, the guidance image that is displayed includes arrows that indicate directions in which it is possible to proceed from the branching point, a place name (an area name) of an area that can be reached by going in the direction indicated by each arrow, a road name of a road that is indicated by each arrow, and the like, in the same manner as the actual direction guidance sign.

Further, in the field of navigation devices, technologies are also already known that superimpose on a map and display symbol images that indicate locations that a user has registered or locations of various types of facilities such as restaurants and the like that are stored in a map data base (refer to JP-A-05-303328, for example). In these technologies, the symbol image that indicates each location is positioned on the map at the coordinates for the location and is displayed together with an image of the map on a display device.

However, although the technology that displays the guidance image of the same sort as the actual direction guidance sign that is installed at the branching point, as described above, has the advantage that the user of the navigation device can easily know the place names (the area names) of the areas that can be reached by going in the various directions from the branching point, the user cannot know specifically what sorts of facilities and the like exist in any one direction from the branching point.

Furthermore, as described above, the technology that superimposes on a map and displays the symbol images that indicate the locations of the various types of facilities and the like makes it possible to know accurately the locations of the various facilities and the like, but in relation to the branching point, it is not possible for the user to recognize easily what sorts of facilities and the like exist in any one direction from the branching point. Moreover, unless the user performs an operation such as scrolling the map or the like, the user cannot know about facilities and the like that are outside the area of the map that is displayed on the display device.

The present invention addresses the issues described above and provides a navigation device and a navigation program that make it possible for the user to recognize easily what sorts of guidance objects exist in each direction in which it is possible to proceed from a branching point in a road when the branching point and a road that approaches the branching point have been designated.

According to the present invention, a characteristic configuration of the navigation device that performs a specified navigation operation based on map information includes a history information storage unit, a history information extraction unit, and a guidance information output unit. The history information storage unit stores information on a guidance object as history information, the information on the guidance object being acquired from a record of the navigation operation. When the branching point in the road and an approach road to the branching point have been designated, the history information extraction unit extracts from the history information storage unit the history information for the guidance object that exists in a direction in which it is possible to proceed from the branching point. The guidance information output unit outputs direction guidance information that provides guidance on a direction in which it is possible to proceed from the branching point and outputs history guidance information that, in association with the direction in the direction guidance information, provides guidance for the guidance object that corresponds to the extracted history information.

Note that in this specification, the branching point in a road is a point in the road where it is possible to choose from at least two directions in which to proceed, and it is a concept that includes an intersection.

The characteristic configuration described above makes it possible, once the branching point in the road and an approach road to the branching point have been designated, to provide the direction guidance information that provides guidance on a direction in which it is possible to proceed from the branching point and to provide guidance for the guidance object that exists in and is associated with the direction in the direction guidance information. Further, the guidance object is extracted from the information on the guidance object that is acquired from the record of the navigation operation and stored as the history information. Accordingly, it is possible to prevent guidance from being provided for more than the necessary number of the objects for which guidance is provided in association with the direction in the direction guidance information. It is also possible to provide guidance only for objects that the user can easily recognize based on past experience. Therefore, in a case where the navigation device proceeds in any direction in which it is possible to proceed from the branching point, it is possible to make it easy for the user to recognize what sorts of the guidance objects exist in the direction in which the navigation device is proceeding.

The guidance object may be, for example, at least one of a location and a road on a map.

More specifically, it is preferable for the information on the guidance object that is acquired from the record of the navigation operation to be at least one of a location that has been set as a destination, a registered location, a location to which the navigation device has actually gone, a distinctive location in the vicinity of a location to which the navigation device has actually gone, and a road that the navigation device has actually traversed.

This configuration makes it possible to define as the guidance object a location, a road, or the like that, it may be inferred, is already known based on the user's past experience. The guidance object may be a location, such as a destination, a registered location, or the like, that the user has actually sought and designated, a location to which the user has actually traveled, a road that the user has actually traversed, or the like. Accordingly, it is possible to provide guidance in association with the direction in the direction guidance information only for a location, a road, or the like that the user can easily recognize based on past experience. Therefore, in a case where the navigation device proceeds in any direction in which it is possible to proceed from the branching point, it is possible to make it easy for the user to recognize what sorts of locations and roads exist in the direction in which the navigation device is proceeding.

It is also preferable for the record of the navigation operation that is used to acquire the information on the guidance object to be at least one of a travel record for the navigation device and a location search record, for example.

It is also preferable for the history guidance information to be information that indicates at least one of a name and an attribute of the guidance object.

This configuration makes it possible for the user to recognize specifically the nature of the guidance object that is output and provides guidance as the history guidance information.

Note that it is possible for the forms in which the direction guidance information and the history guidance information are output by the guidance information output unit to include image information that is displayed on a display device and audio information that is output from an audio output device such as a speaker or the like.

It is also preferable for the direction guidance information to be image information that indicates by an arrow the direction in which it is possible to proceed from the branching point and for the history guidance information to be one of a symbol image and text information that indicates the guidance object and that is placed in a position that corresponds to the arrow for the direction in the direction guidance information.

This configuration makes it possible to provide guidance that is appropriately displayed such that the user can easily recognize the direction in which it is possible to proceed from the designated branching point and can easily recognize the guidance object that exists in and is associated with the direction in the direction guidance information.

It is also preferable for the direction guidance information to be one of image information of the same sort as a direction guidance sign that is installed at an actual branching point and lane guidance image information that provides guidance on the directions in which it is possible to proceed in each lane before the branching point.

This configuration makes it possible to provide guidance on the direction in which it is possible to proceed from the designated branching point in a form that the user can easily recognize without any feeling of incongruity.

It is also preferable for the navigation device to include an exclusion unit that, based on a configuration of a road that extends from the branching point, excludes, from the history information for the guidance objects that exist in a direction in which it is possible to proceed from the branching point, the history information for a guidance object that is difficult to reach even if the navigation device proceeds in the direction of the guidance object.

This configuration makes it possible not to provide guidance for the guidance object that is difficult to reach even if the navigation device proceeds in the direction of the guidance object, based on the configuration of the road that extends from the branching point. That is, it is possible to exclude a guidance object such as a location, a road, or the like that exists along the road that extends from the branching point, but that cannot be easily reached, because of a road configuration such as a dividing strip, a multi-level intersection, or the like, for example. Accordingly, it is possible to suppress the guidance for an object that is associated with the direction in the direction guidance information, but for which the guidance should not be provided. This makes it possible to prevent guidance from being provided for more guidance objects than necessary. Therefore, in a case where the navigation device proceeds in any direction in which it is possible to proceed from the branching point, it is possible to make it even easier for the user to recognize what sorts of the guidance objects exist in the direction in which the navigation device is proceeding.

It is also preferable for the navigation device to include a current position information acquisition unit that acquires current position information. Based on a current position in the current position information, the navigation device may designate a branching point that exists in a direction in which the current position is proceeding on a map that is indicated in the map information as the branching point and may designate a road on which the current position is proceeding toward the branching point as the approach road to the branching point.

This configuration makes it possible the designate a branching point that is close to the current position and an approach road to the branching point in a manner that is appropriate and suited to the actual current position. Therefore, it is possible to output the direction guidance information and the history guidance information that provide guidance for the branching point at an appropriate time when the user designates the information on the branching point to be necessary.

According to the present invention, a characteristic configuration of the navigation program that causes a computer to perform a specified navigation operation based on map information includes a history information storage step of storing information on a guidance object as history information in a history information storage unit, the information on the guidance object being acquired from a record of the navigation operation. The navigation program also includes a history information extraction step of extracting from the history information storage unit, when a branching point in a road and an approach road to the branching point have been designated, the history information for the guidance object that exists in a direction in which it is possible to proceed from the branching point. The navigation program also includes a history information extraction step of outputting direction guidance information that provides guidance on a direction in which it is possible to proceed from the branching point and history guidance information that, in association with the direction in the direction guidance information, provides guidance for the guidance object that corresponds to the extracted history information.

The characteristic configuration described above makes it possible, once the branching point in the road and an approach road to the branching point have been designated, to provide the direction guidance information that provides guidance on a direction in which it is possible to proceed from the branching point and to provide guidance for the guidance object that exists in and is associated with the direction in the direction guidance information. Further, the guidance object is extracted from the information on the guidance object that is acquired from the record of the navigation operation and stored as the history information. Accordingly, it is possible to prevent guidance from being provided for more than the necessary number of the objects for which guidance is provided in association with the direction in the direction guidance information. It is also possible to provide guidance only for objects that the user can easily recognize based on past experience. Therefore, in a case where the navigation device proceeds in any direction in which it is possible to proceed from the branching point, it is possible to make it easy for the user to recognize what sorts of the guidance objects exist in the direction in which the navigation device is proceeding.

It is preferable for the navigation program also to an exclusion step of excluding from the history information for guidance objects that exist in a direction in which it is possible to proceed from the branching point, based on a configuration of a road that extends from the branching point and a direction in which a current position is proceeding, the history information for a guidance object that is difficult to reach even if the navigation device proceeds in the direction of the guidance object.

This configuration makes it possible not to provide guidance for the guidance object that is difficult to reach even if the navigation device proceeds in the direction of the guidance object, based on the configuration of the road that extends from the specified branching point. That is, it is possible to exclude a guidance object such as a location, a road, or the like that exists along the road that extends from the branching point, but that cannot be easily reached from the lane in which the navigation device is proceeding, because of a road configuration such as a dividing strip, a multi-level intersection, or the like, for example. Accordingly, it is possible to suppress the guidance for an object that is associated with the direction in the direction guidance information, but for which the guidance should not be provided. This makes it possible to prevent guidance from being provided for more guidance objects than necessary. Therefore, in a case where the navigation device proceeds in any direction in which it is possible to proceed from the branching point, it is possible to make it even easier for the user to recognize what sorts of the guidance objects exist in the direction in which the navigation device is proceeding.

An embodiment of the present invention will be explained with reference to the drawings.
FIG. 1 is a block diagram that shows an overall configuration of a navigation device according to an embodiment of the present invention;
FIG. 2 is a figure that shows an example of guidance information according to an embodiment of the present invention;
FIG. 3 is a figure that shows examples of direction guidance information that is stored in a direction guidance data base;
FIG. 4 is a figure that shows examples of history information that is stored in a history data base;
FIG. 5 is a figure that shows an example of an image that is displayed on a display device;
FIG. 6 is an explanatory figure that shows guidance objects that exist in the vicinity of a branching point, arranged on a map and displayed;
FIG. 7 is a flowchart that shows an overall procedure for guidance processing according to the embodiment of the present invention;
FIG. 8 is a flowchart that shows a procedure for history information collection processing according to the embodiment of the present invention;
FIG. 9 is a figure that shows an example of guidance information according to another embodiment of the present invention; and
FIG. 10 is a figure that shows an example of guidance information according to another embodiment of the present invention.

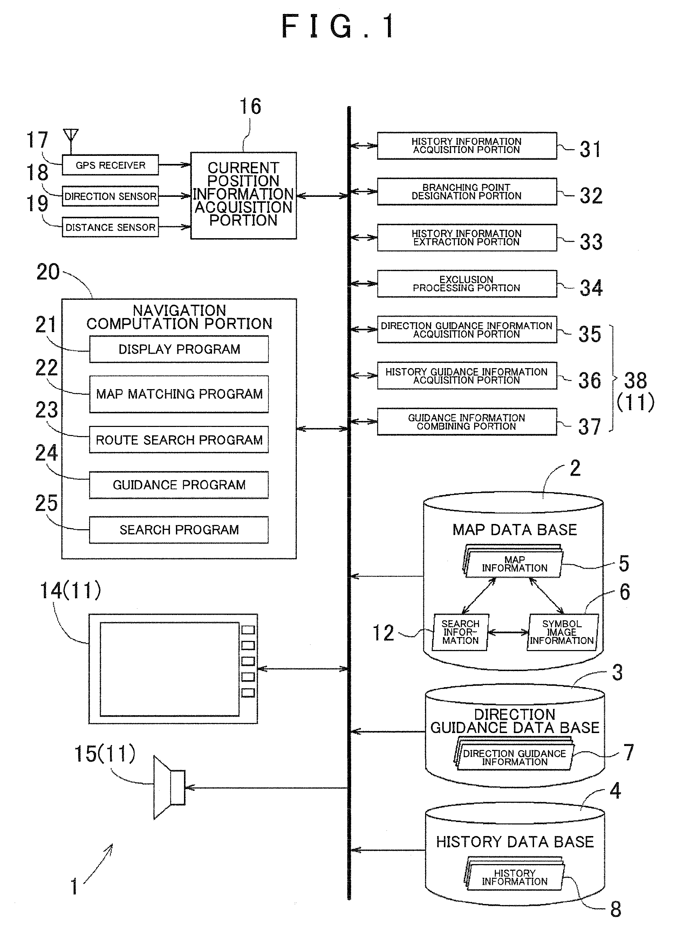

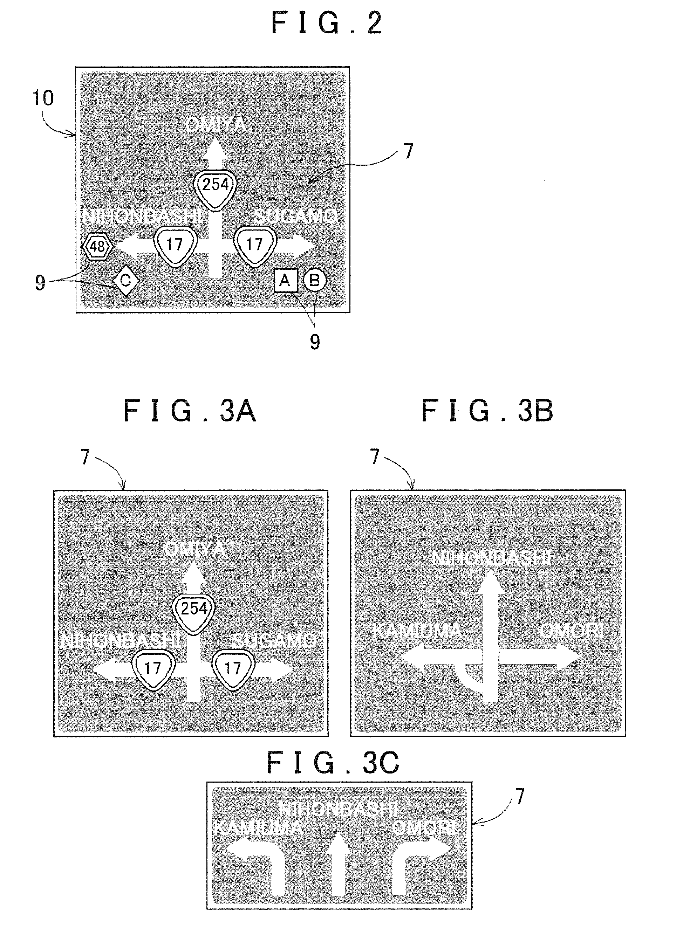

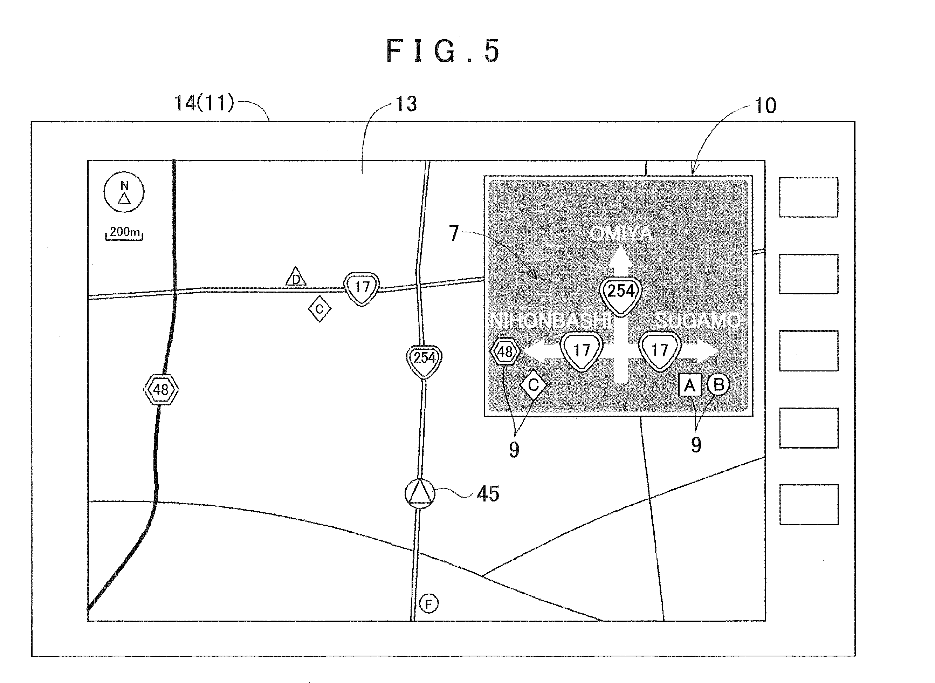

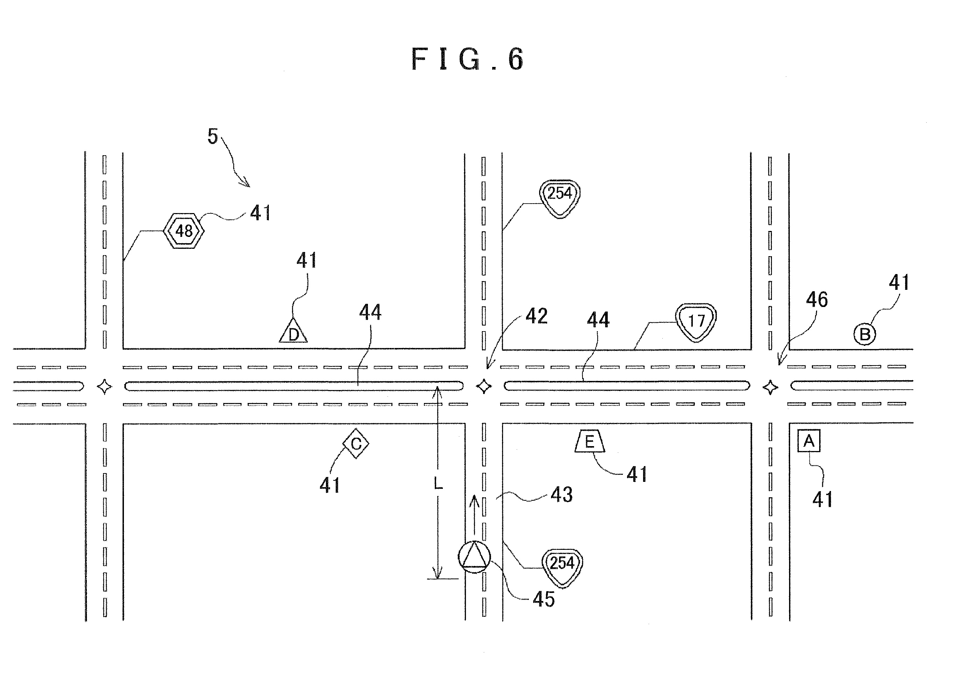

As an example, a case will be explained in which a navigation device 1 according to the present invention is installed in a vehicle and used. FIG. 1 is a block diagram that shows an overall configuration of the navigation device 1 according to the present embodiment. The navigation device 1 is provided with a display device 14 as an output device that is a configuring element of a guidance information output unit 11. In the present embodiment, the navigation device 1 stores, as history information 8 in a history data base 4, information on a location and a road (an example of a guidance object 41) that is acquired from a record of a navigation operation (refer to FIG. 5). Further, the navigation device 1 is configured such that, when a road branching point 42 and an approach road 43 to the branching point 42 (refer to FIG. 6) have been designated, the navigation device 1 outputs to the display device 14 guidance information 10 that is a combination of direction guidance information 7 and history guidance information 9. The direction guidance information 7 provides guidance for a direction in which the vehicle can proceed from the branching point 42, as shown in FIG. 2, for example. The history guidance information 9 provides guidance for a location and a road that correspond to the history information 8 that is stored in the history data base 4. FIG. 2 is a figure that shows an example of the guidance information 10 that is displayed on the display device 14.

Each functional portion of the navigation device 1 shown in FIG. 1 has as its core member a computation processing device such as a CPU or the like that is one of mutually shared and independently utilized. Each functional portion for performing various types of processing on data that is input can be implemented by one of hardware, software (a program), and both hardware and software. Each functional portion is also configured such that it can exchange information with another functional portion. In a case where each functional portion is implemented by software (a program), the software is stored in a storage unit such as a RAM and a ROM to which the computation processing device can refer. The navigation device 1 also includes a map data base 2 and a direction guidance data base 3. Each of the data bases 2 to 4 of the navigation device 1 is provided with a storage unit (storage medium) that is configured in hardware and is one of mutually shared and independently utilized. A hard disk drive, a flash memory, a DVD drive that is provided with a DVD-ROM, a CD drive that is provided with a CD-ROM, and the like may be used as the storage unit that is a configuring element of each of the data bases 2 to 4. However, as described later, the history data base 4, in which the history information 8 must be updated, is configured from a rewriteable storage unit such as a hard disk drive, a flash memory, or the like. The configuration of each portion of the navigation device 1 according to the present embodiment will be explained in detail below.

### 1. Output device

As shown in FIG. 1, in the present embodiment, the navigation device 1 is provided with the display device 14 and an audio output device 15 as output devices that are configuring elements of the guidance information output unit 11. The display device 14 is a device that, in order to perform a function of the navigation device 1, outputs various types of image information, such as the guidance information 10, a map image 13 that is based on map information 5, and the like (refer to FIG. 5). Various types of display devices, such as a liquid crystal display, a plasma display, an organic electroluminescence (EL) display, a field emission display, a cathode ray tube (CRT) display, and the like, for example, can be used as the display device 14. Image information that is created by a display program 21 of a navigation computation portion 20 that is described later is also displayed on the display device 14. In addition to the map information 13 and the guidance information 10 shown in FIG. 5, this sort of image information includes various types of images that are necessary for the navigation device 1, such as a search screen for a location such as a destination or the like, a setting screen for changing various types of settings, and the like, for example. The display device 14 is also provided with an operation input device, such as a touch panel that is provided on the display screen, an operation switch that is provided adjacent to the display screen, or the like. By operating the operation input device, the user can input commands to the navigation device 1 for navigation operations, such as searching for and registering a location such as a destination or the like, calling up the search screen, searching for and setting a guided route, and the like. Further, the audio output device 15 is a device that outputs the guidance information, such as route guidance for the guided route that is set and the like, in the form of sound. The audio output device 15 is configured from a speaker, an amplifier, and the like.

### 2. Map data base

The map data base 2 is a data base in which the map information 5 is stored. The map information 5 is divided into a plurality of levels, from a high level of information that is used when a wide area map is displayed to a low level of information that is used when a detailed map is displayed, and is controlled by being hierarchically organized according to the level. The information at each level is divided into units of rectangular areas called partitions that are delimited at specified longitudes and latitudes. The map information 5 for each partition can be read by specifying a partition identification code, such as a partition number or the like, that is set for each partition. The map information 5 for each partition includes basic map information, map information for displaying and map matching, map information for route searching, and the like. The basic map information includes road network data that is expressed in the form of connection relationships among pluralities of links and nodes. The map information for displaying and map matching includes detailed map data that is used for displaying and matching maps. The map information for route searching includes road network data that is used for route searching. Specific information that is contained in the map information for displaying and map matching includes, for example, road shape data that indicates in detail a shape of a road, background data that indicates shapes of buildings, rivers, and the like, text data that expresses location names, facility names, and the like, symbol images that express road names, and the like. The symbol images that express the road names are images that are ordinarily used in maps and are expressed, for example, in the form of numerals that indicate road numbers, enclosed within frames that vary according to the type of road, such as a national route, a prefectural route, or the like (for example, frames such as a downward-pointing triangle, a hexagon, and the like). FIG. 5 shows an example of a map display that includes the symbol images that indicate the road names.

Also stored in the map data base 2 are route guidance information (not shown in the drawings), which includes image data, audio data, and the like that are used for route guidance, search information 12, which is used in searching for a location or the like, and the like. Specific information that is contained in the search information 12 includes, for example, search data, location data, and the like. The search data defines a search condition such as an address, a telephone number, a facility name, a genre, or the like and is used in searching for a location. The location data expresses information about a specific location. In addition to coordinate information that indicates the position of the location, the location data includes attribute information, such as the names of facilities, shops, and the like that exist at the location, the types of services available at the location, and the like. The location data is also associated with symbol image information 6, which is information on symbol images that indicate the names, attributes, and the like of the facilities, shops, and the like that exist at the location. Therefore, in a case where the location that is indicated by the location data is displayed as a search result or the like on the map that is displayed on the display device 14, the symbol images that are indicated by the symbol image information 6 that is associated with the location data are displayed at the positions indicated by the coordinate information that is included in the location data. FIG. 5 shows an example of a map display that includes the symbol images that are associated with the location data. In the present embodiment, the symbol images are combinations of alphabetic characters and graphic forms with comparatively simple shapes, but in actual use, graphic forms and combinations of graphic forms and characters are used that express in an easily understood way the names, attributes, and the like of the facilities and shops that exist at the location. The symbol images may include, for example, map symbols that indicate a store logo, a building shape of a facility, or an attribute of a facility or a shop, symbols that show, in graphic form, text that expresses the name of a facility or a shop, and the like.

### 3. Direction guidance data base

The direction guidance data base 3 is a data base in which the direction guidance information 7 is stored. The direction guidance information 7 is image information that expresses, in the form of an arrow, a direction in which it is possible to proceed from a branching point in a road. The branching point in the road is a point on the road where it is possible to select at least two directions in which to proceed, and it can be an intersection where a plurality of roads intersect. FIG. 3 is a figure that shows examples of the direction guidance information 7 that is stored in the direction guidance data base 3. In the present embodiment, as shown in FIG. 3, the direction guidance information 7 is image information of the same sort as a direction guidance sign that is installed at an actual branching point. In the direction guidance data base 3, a plurality of items of the direction guidance information 7 are stored in association with information about a branching point (that is, a node) in the map information 5 that corresponds to the branching point where various roads meet and in association with information about an approach road (that is, a link) to the branching point.

FIG. 3A shows the guidance information 7 that is image information of the same sort as a direction guidance sign that is installed at an intersection where National Route 17 and National Route 254 intersect. The direction guidance information 7 includes image information of arrows that indicate that it is possible to go straight, to turn right, and to turn left. The direction guidance information 7 also includes text information that indicates an area name that is positioned in association with the direction of each of the arrows, such that the direction guidance information 7 indicates by the arrows that it is possible to proceed to Omiya by going straight at the intersection, to Sugamo by turning right, and to Nihonbashi by turning left.

FIG. 3B shows the guidance information 7 that is image information that is on a direction guidance sign that is installed at a specified multi-level intersection. The guidance information 7 includes image information of arrows that indicate a branching point where it is possible to go straight and that indicate that after turning left at the branching point, the vehicle will reach another branching point, where it is possible to turn right and to turn left. The direction guidance information 7 also includes text information that indicates an area name that is positioned in association with the direction of each of the arrows, such that the direction guidance information 7 indicates by the arrows that it is possible to proceed to Nihonbashi by going straight at the intersection, that after turning left at the first branching point, it is possible to proceed to Omori by turning right and to proceed to Kamiuma by turning left. FIG. 3C shows the guidance information 7 that is image information of the same sort as a direction guidance sign that indicates the directions in which it is possible to proceed at an intersection, expressed in a different form from that shown in FIGS. 3A and 3B. The direction guidance information 7 includes image information of arrows that indicate that it is possible to go straight, to turn right, and to turn left. The direction guidance information 7 also includes text information that indicates an area name that is positioned in association with the direction of each of the arrows, such that the direction guidance information 7 indicates by the arrows that it is possible to proceed to Nihonbashi by going straight at the intersection, to Omori by turning right, and to Kamiuma by turning left.

### 4. History data base

The history data base 4 functions as a history information storage unit that stores, as the history information 8, information on a guidance object 41 that is acquired from a record of a navigation operation of the navigation device 1. The guidance object 41 is an object for which guidance is provided in association with the direction guidance information 7 and serves as the history guidance information 9 (refer to FIG. 2) that is a configuring element of the guidance information 10. In the present embodiment, the guidance object 41 may be one of a location on a map and a road, as shown in FIG. 6, for example. That is, in the present embodiment, information on one of a specified location and a specified road, which is acquired by the navigation computation portion 20 from a record of a navigation operation, is stored as the history information 8 in the history data base 4 by a history information acquisition portion 31 that is described later. Note that the questions of what sorts of locations and roads serve as the guidance objects 41 and whether the history information 8 is acquired will be explained later in a section on the history information acquisition portion 31.

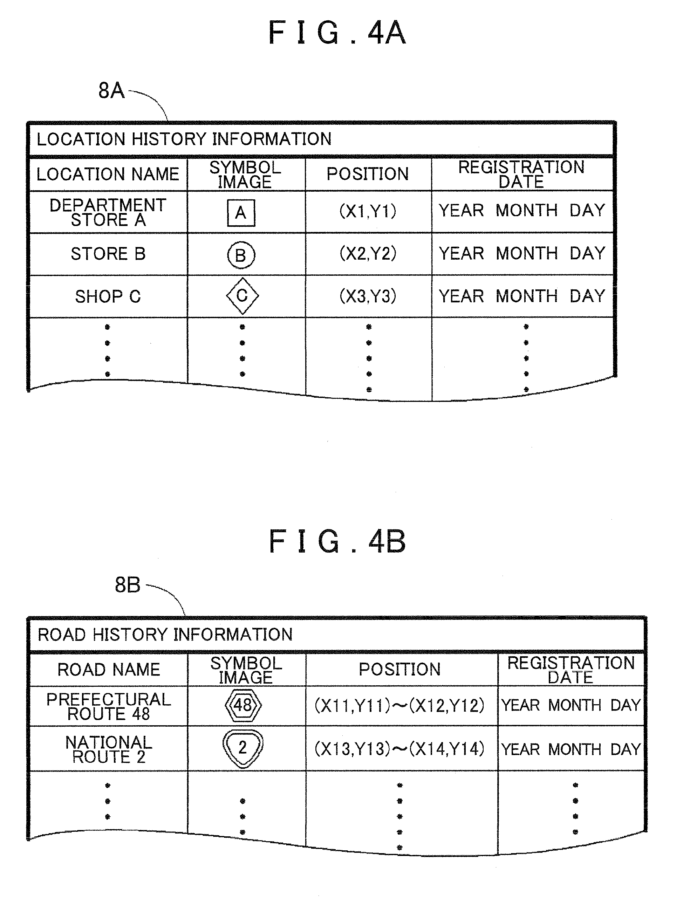

FIG. 4 is a figure that shows examples of the history information 8 that is stored in the history data base 4. In the present embodiment, location history information 8A like that shown in FIG. 4A and road history information 8B like that shown in FIG. 4B are stored in the history data base 4. In the explanation that follows, the term "the history information 8" is used as a general term for both the location history information 8A and the road history information 8B. The location history information 8A is the history information 8 that is stored in the history data base 4 for each location. The content of the location history information 8A includes information on a location name, a symbol image, a position, and a registration date. The location name is information that indicates a name of a facility, a shop, or the like that exists at the location. The symbol image is a symbol image that indicates a name, an attribute, or the like of a facility, a shop, or the like that exists at the location. The symbol image uses the same sort of image information as the symbol image that is indicated by the symbol image information 6 that is stored in the map data base 2. The position is coordinate information that indicates the position of the location. The registration date is information that indicates the year, month, and day that the location history information 8A for the location was acquired by the history information acquisition portion 31, which is described later, and registered (stored) in the history data base 4. Note that it is preferable for the information on the symbol image to be information that indicates a storage location for the symbol image information 6 that is stored in the map data base 2 for the same symbol image.

The content of the road history information 8B includes information on a road name, a symbol image, positions, and a registration date. The road name is information that expresses a name of a road, such as National Route XX, Prefectural Route XX, or the like. The symbol image is a symbol image that indicates the road, and it uses the same sort of image information as the symbol image that indicates the road name and is contained in the map information 5 that is stored in the map data base 2. The positions are coordinate information that indicates the positions of a starting point and an ending point of a segment of the road that is registered as the road history information 8B. The registration date is information that indicates the year, month, and day that the road history information 8B for the road was acquired by the history information acquisition portion 31, which is described later, and registered (stored) in the history data base 4. Note that the segment of the road that is registered as the road history information 8B is acquired by the history information acquisition portion 31 from a record of a navigation operation, as described later, and is a road segment that the vehicle (the current position) has actually traversed. Therefore, for example, in a case where the position information that is contained in the road history information 8B for Prefectural Route 48 is (X11, Y11) to (X12, Y12), as shown in FIG. 4B, the position information indicates that the vehicle has entered Prefectural Route 48 from another road at a location with the coordinates (X11, Y11) and has exited Prefectural Route 48 to another road at another location with the coordinates (X12, Y12). Furthermore, in the present embodiment, the symbol image information, in the same manner as actual road signs, uses images in which numerals indicate the road numbers, enclosed within a downward-pointing triangular frame for a national route and enclosed within a hexagonal frame for a prefectural route. Note that it is preferable for the information on the symbol image to be information that indicates a storage location for the information on the same symbol image that indicates the road and that is contained in the map information 5 that is stored in the map data base 2.

### 5. Current position information acquisition unit

A current position information acquisition unit 16 functions as a current position information acquisition unit that acquires vehicle position information that indicates the current position of the vehicle. The current position information acquisition unit 16 is connected to a Global Positioning System (GPS) receiver 17, a direction sensor 18, and a distance sensor 13. The GPS receiver 17 is a device that receives a GPS signal from a GPS satellite. The GPS signal is normally received once every second and output to the current position information acquisition unit 16. In the current position information acquisition unit 16, the signal that was received by the GPS receiver 17 from the GPS satellite can be analyzed, and information can be acquired, such as the current position (coordinates) of the vehicle, a direction in which the vehicle is proceeding, the vehicle's speed of movement, and the like. The direction sensor 18 is a sensor that detects at least one of the direction in which the vehicle is proceeding and a change in the direction in which the vehicle is proceeding. The direction sensor 18 may be configured from a gyroscope, a geomagnetic sensor, or the like, for example. The direction sensor 18 also outputs a detection result to the current position information acquisition unit 16. The distance sensor 19 is a sensor that detects at least one of the speed of the vehicle and the distance the vehicle has traveled. The distance sensor 19 may be configured from a vehicle speed pulse sensor that outputs a pulse signal every time the drive shaft, a wheel, or the like of the vehicle rotates by a fixed amount, one of a yaw sensor and a G sensor that detects acceleration of the vehicle, together with a circuit that integrates the detected acceleration, or the like, for example. The distance sensor 19 also outputs to the current position information acquisition unit 16, as a detection result, information on the vehicle speed and the distance the vehicle has traveled.

Based on the outputs from the GPS receiver 17, the direction sensor 18, and the distance sensor 19, the current position information acquisition unit 16 performs a computation that specifies the current position according to a known method. Furthermore, as described later, the navigation computation portion 20 includes, as an application program, a map matching program 22, and by performing a known map matching based on the map information 5 that is acquired from the map data base 2, the navigation computation portion 20 performs a correction that matches the current position to a road that is shown in the map information 5. The result of the correction of the current position information by the map matching program 22 is sent to the current position information acquisition unit 16 and is reflected in the current position information that is acquired by the current position information acquisition unit 16. Thus the current position information acquisition unit 16 acquires the current position information that includes the current position that is indicated by the coordinates (longitude and latitude) and information on the direction in which the vehicle is proceeding.

### 6. Navigation computation portion

The navigation computation portion 20 is a computation processing portion that performs computation processing in order to execute specified navigation operations, based on the map information 5 that is stored in the map data base 2. The navigation computation portion 20 operates in accordance with a plurality of application programs 21 to 25 in order to execute the specified navigation operations. As shown in FIG. 1, in this example the application programs include five programs, specifically a display program 21, the map matching program 22, a route search program 23, a guidance program 24, and a search program 25.

The display program 21 creates various types of images that are necessary for the navigation device 1 and displays them on the display device 14. The images include a map image 13 that is based on the map information 5 for an area around a position that is specified by the user, such as the vicinity of the current position, a destination, or the like. The images also include a screen for searching for the destination and the like, a setting screen for changing various types of settings, and the like. FIG. 5 is a figure that shows an example of an image that is displayed on the display device 14. In the example shown in FIG. 5, a current position display 45 that shows the current position, the guidance information 10, and the like are superimposed on the map image 13 and displayed. The map matching program 22 performs the map matching processing that matches the current position that is indicated in the current position information that is acquired by the current position information acquisition unit 16 to a road in the map that is shown in the map information 5. The route search program 23 performs a route search for a route from a starting point such as the current position or the like, for example, to a destination that is set and input by the user. The guidance program 24 performs processing that guides the user on an appropriate course by using a guidance display by the display device 14, audio guidance by the audio output device 15, and the like, in accordance with the route to the destination that has been determined by the route search program 23. The search program 25 performs processing that searches for a location on the map that can become a destination, a registered location, or the like, based on various types of search conditions, such as an address, a telephone number, a facility name, a genre, and the like. In performing the search, the search program 25 operates by referring to the map information 5 that is stored in the map data base 2 and to the search information 12, which includes the search data, the location data, and the like, as described above. The input of the search conditions and the like is performed by the user's operating of the operation input device, such as a touch panel, an operation switch, or the like, in accordance with the search screen that is displayed on the display device 14. Note that the operation processes of the navigation device 1 that are performed by the application programs 21 to 25 are known, so a detailed explanation will be omitted.

### 7. History information acquisition portion

The history information acquisition unit 31 functions as a history information acquisition unit that acquires, as the history information 8, from records of navigation operations that are performed by the navigation computation portion 20, information on the locations and the roads that are the guidance objects 41 (refer to FIG. 6). The history information acquisition unit 31 stores the history information 8 that it has acquired in this manner in the history data base 4. From among the various types of information about the locations and the roads that are contained in the records of the navigation operations, the history information acquisition unit 31 in the present embodiment acquires, as the history information 8, information on the locations that have been set as destinations, the locations that have been registered, the locations to which the vehicle has actually gone, the distinctive locations in the vicinity of the locations to which the vehicle has actually gone, and the roads that the vehicle has actually traversed. For that reason, from among all of the records of the navigation operations, the history information acquisition unit 31 acquires the history information 8 with a focus on the travel records for the vehicle and search records for the locations. The travel records for the vehicle are information on the courses that the vehicle has followed on the map that is indicated in the map information 5, the courses being indicated by the current position information that is acquired by the current position information acquisition unit 16. The search records for the locations are information on searches for the locations on the map that can become destinations, registered locations, and the like, the searches having been performed according to the search program 25.

Specifically, the history information acquisition unit 31 acquires, as the history information 8, the information on the locations that have been set as destinations and the locations that have been registered. That is, the navigation computation portion 20, in accordance with the search program 25, searches for the desired location according to the various types of search conditions that are input in accordance with the search screen that is displayed on the display device 14. When the search is performed, the search conditions may include an address, a telephone number, a facility name, a genre, and the like, for example, and the user inputs the search conditions by operating the operation input device, such as a touch panel or the like, in accordance with the search screen. Further, while the map image 13 (refer to FIG. 5) is displayed on the display device 14, the navigation computation portion 20 performs an operation that scrolls the map image 13 in accordance with an operation input from the user. This makes it possible for the user to search for the desired location on the map image 13. In accordance with further input from the user, the navigation computation portion 20 does one of setting the location that has been found as the destination for a route search and storing the location that has been found as a specific registered location in the map data base 2. Based on the operations records of the navigation computation portion 20 in setting the destinations and registering the locations in this manner, the history information acquisition unit 31 acquires, as the history information 8, the information on the locations that have been set as destinations and the locations that have been registered. The information that is contained in the history information 8 includes information on the location name, the symbol image, the position, and the registration date for each location, as shown in FIG. 4A. The history information that is acquired as described here is stored in the history data base 4 as the location history information 8A.

The history information acquisition unit 31 also acquires, as the history information 8, the information on the locations to which the vehicle has actually gone, the distinctive locations in the vicinity of the locations to which the vehicle has actually gone, and the roads that the vehicle has actually traversed, based on the travel history of the current position. That is, based on the current position information that has been acquired by the current position information acquisition unit 16, the navigation computation portion 20 can recognize the current position on the map that is indicated in the map information 5 and can recognize whether the vehicle is in motion or has stopped. Further, in a case where an on/off operation for the main power supply of the navigation device 1 is performed while the vehicle is stopped, the navigation computation portion 20 can determine that the vehicle has been stopped for longer than a specified time, that is, that the current position (the vehicle) has reached the location in question. The history information acquisition unit 31 defines this sort of location as a location to which the vehicle has actually gone and acquires it as the history information 8. Note that in a case where the location to which the vehicle has actually gone matches a location where a facility, a shop, or the like exists, the history information acquisition unit 31 can presume that the vehicle has arrived at the facility, the shop, or the like that exists in the vicinity of the location in question. In that case, the history information acquisition unit 31 defines the location of the facility, the shop, or the like that exists in the vicinity of the location in question as a distinctive location in the vicinity of the location to which the vehicle has actually gone and acquires it as the history information 8. In a case where a plurality of facilities, shops, or the like exist in the vicinity of the location in question, the history information acquisition unit 31 acquires, as the history information 8, the information for the facility, the shop, or the like that exists in the closest proximity to the location in question. The information that is contained in the history information 8 includes information on the location name, the symbol image, the position, and the registration date for each location, as shown in FIG. 4A. The history information 8 that is acquired as described here is stored in the history data base 4 as the location history information 8A.

The navigation computation portion 20 also uses the map matching program 22 to correct the current position that is indicated by the current position information that has been acquired by the current position information acquisition unit 16, such that the current position matches a road on the map. The history information acquisition unit 31 defines the road on the map that the vehicle has traversed, as corrected by the map matching process, as well as the segment of the road that the vehicle has traversed as a road that the vehicle has actually traversed and acquires it as the history information 8.
The information that is contained in the history information 8 includes information on the road name, the symbol image, the position, and the registration date for each road, as shown in FIG. 4B. The history information 8 that is acquired as described here is stored in the history data base 4 as the location history information 8B.

### 8. Branching point designation unit

A branching point designation unit 32 functions as a branching point designation unit that designates a branching point in a road and an approach road to the branching point, based on the map information 5 that is acquired from the map data base 2 and on the current position information that is acquired by the current position information acquisition unit 16. The branching point designation unit 32 designates the branching point in the road and the approach road to the branching point as conditions for the output of the guidance information 10 by the guidance information output unit 11. Based on the current position display 45 that is indicated in the current position information, as shown in FIG. 6, for example, the branching point designation unit 32 performs processing that designates the branching point 42 that exists in the direction in which the vehicle is proceeding as the branching point 42 and designates the approach road 43 on which the vehicle is currently proceeding toward the branching point 42 as the approach road 43 to the branching point 42 on the map that is indicated in the map information 5. In performing the processing, the branching point designation unit 32 monitors the current position display 45 on the map that is indicated in the map information 5 and designates the branching point 42 and the like on the condition that the distance to the branching point 42 that exists in the direction in which the vehicle is proceeding is within a specified guidance distance L. It is preferable for the guidance distance L to be set to a distance from the branching point 42 that is appropriate for outputting the guidance information 10 that relates to the branching point 42, as described later. For example, it is preferable for the guidance distance L to be set to 100 meters to 50 meters.

In the example shown in FIG. 6, the current position display 45 that is indicated in the current position information after the map matching is proceeding upward on the map along National Route 254. The branching point 42, which is an intersection where National Route 254 intersects National Route 17, exists in the direction in which the current position display 45 is proceeding. Therefore, in this example, when the distance from the current position display 45 to the branching point 42 becomes less than the guidance distance L, the branching point designation unit 32 designates the intersection of National Route 254 and National Route 17 as the branching point 42 and designates the portion of National Route 254 that leads to the branching point 42, which is the portion of National Route 254 that is below National Route 17 on the map, as the approach road 43.

### 9. History information extraction unit

A history information extraction unit 33 functions as a history information extraction unit that, when the branching point 42 in the road and the approach road 43 to the branching point 42 have been designated by the branching point designation unit 32, extracts from the history data base 4 at least one item of the history information 8 that pertains to the roads and to the locations of the guidance objects 41 (refer to FIG. 6) that exist in the various directions in which it is possible for the vehicle to proceed from the branching point 42. That is, the history information extraction unit 33 searches the history data base 4 and extracts the history information 8 that pertains to at least one of the guidance objects 41 that exist along all of the roads that diverge from the designated branching point 42 in the various directions in which it is possible for the vehicle to proceed, excluding the approach road 43. In performing the execution, the history information extraction unit 33 uses the designated branching point 42 as a reference and extracts the history information 8 that pertains to the guidance objects 41 that exist within a specified extraction range. The extraction range may be, for example, a range that lies within a circle with a fixed radius that is centered on the designated branching point 42, a range that is defined by the distance that the vehicle will travel from the designated branching point 42 to each of the guidance objects 41 (the vehicle travel distance), or the like. The radius or the travel distance that defines the execution range is appropriately set such that the number of the guidance objects 41 for which the guidance is provided in the form of the history guidance information 9 is an appropriate number that is not excessive. In the example described below, the extraction range for the guidance objects 41 is set to be within approximately 500 meters, which is a travel distance of the current position from the branching point 42 to the guidance object 41.

FIG. 6 is an explanatory figure that shows the guidance objects 41 that exist in the vicinity of the branching point 42, arranged on a map and displayed. The guidance objects 41 are stored as the history information 8 in the history data base 4. In this example, five locations A to E and one road (Prefectural Route 48) are the guidance objects 41 that exist within the specified extraction range from the designated branching point 42, and the history information 8 for them is stored in the history data base 4. From the history data base 4 in which the history information 8 is stored, the history information extraction unit 33 extracts the history information 8 for each direction in which it is possible to proceed from the designated branching point 42, that is, the history information 8 for the locations and the roads that are the guidance objects 41 that respectively exist in the directions that the vehicle can proceed by going straight, turning right, and turning left at the branching point 42. Therefore, in the example in FIG. 6, the history information extraction unit 33 does not extract the history information 8 for the direction straight ahead, but does extract the location history information 8A for the locations A, B and E in the right turn direction, the location history information 8A for the locations C and D in the left turn direction, and the road history information 8B for Prefectural Route 48 (the road) in the left turn direction.

### 10. Exclusion processing portion

An exclusion processing portion 34 functions as an exclusion unit that excludes, from at least one item of the history information 8 for the guidance objects 41 that exist in each direction in which it is possible to proceed from the designated branching point 42, the history information 8 for the guidance objects 41 that are difficult to reach even if the vehicle proceeds in the directions of the guidance objects 41. The exclusion processing portion 34 excludes the history information 8 based on the configuration of the roads that extend from the branching point 42. Based on the road configuration, the exclusion processing portion 34 in the present embodiment performs processing that excludes, from the history information 8 that is extracted by the history information extraction unit 33, the history information 8 for the guidance objects 41 that are difficult to reach even if the vehicle proceeds in the directions of the guidance objects 41. The guidance objects 41 that are difficult to reach even if the vehicle proceeds in the directions of the guidance objects 41 are locations, roads, and the like that exist along the roads in the directions in question, but that the vehicle (the current position) cannot easily reach from the lane in which it is currently proceeding, because of a road configuration such as a dividing strip, a multi-level intersection, or the like, for example. It is preferable to exclude, from the objects for which guidance is provided in the form of the guidance information 10, the locations, roads, and the like that the vehicle cannot easily reach even if it proceeds in their direction. Therefore, in the present embodiment, the exclusion processing portion 34 performs the processing that excludes, from the history information 8 for the guidance objects 41 that is extracted by the history information extraction unit 33, the history information 8 for the guidance objects 41 that cannot be easily reached.

In the example shown in FIG. 6, the road (National Route 17) that intersects the approach road 43 at the designated branching point 42 has a center dividing strip 44. Therefore, in a case where the vehicle (the current position) proceeds in the left turn direction at the designated branching point 42, the vehicle cannot easily reach a location D that exists on the right side of the road (National Route 17) in the direction in which the vehicle is proceeding. In the same manner, in a case where the vehicle (the current position) proceeds in the right turn direction at the designated branching point 42, the vehicle cannot easily reach a location E that exists on the right side of the road (National Route 17) in the direction in which the vehicle is proceeding. Therefore, the exclusion processing portion 34 performs the processing that excludes, from the history information 8 for the guidance objects 41 that is extracted by the history information extraction unit 33, the location history information 8A for the locations D and E. By contrast, in a case where the vehicle (the current position) proceeds in the right turn direction at the designated branching point 42, a location A exists on the right side of the road (National Route 17) in the direction in which the vehicle is proceeding. However, the location A can be easily reached by turning right at an intersection 46. Therefore, in this example, the exclusion processing portion 34 does not exclude the location history information 8A for the location A. Note that in FIG. 6, an example is shown in which the dividing strip is the reason why there are guidance objects 41 that are difficult to reach, but there are also cases in which various types of road configurations, such as a multi-level intersection, an overpass, a one-way street, and the like, for example, are the reasons. There are also cases in which the reasons are the configurations of the facilities, shops, and the like that exist at various locations, such as the placement of entrances to and the locations of parking lots for the facilities, shops, and the like. In each of these cases, the exclusion processing portion 34 performs the processing that determines, based on the map information 5 and the like that is stored in the map data base 2, that the guidance object 41 is difficult to reach and excludes the guidance object 41.

### 11. Direction guidance information acquisition unit

A direction guidance information acquisition unit 35 functions as a direction guidance information acquisition unit that acquires the direction guidance information 7 that provides guidance for a direction in which it is possible to proceed from the branching point 42, when the branching point designation unit 32 designates a branching point 42 in a road and an approach road 43 to the branching point 42. In the present embodiment, as explained previously, the direction guidance information 7 is image information of the same sort as a direction guidance sign that is installed at an actual branching point, and a plurality of items of the direction guidance information 7 are stored in the direction guidance data base 3. In the direction guidance data base 3, each item of the direction guidance information 7 is stored in association with information about a branching point (that is, a node) and about an approach road to the branching point (that is, a link) in the map information 5 that corresponds to a branching point where various roads meet. Therefore, in accordance with the designations by the branching point designation unit 32, the direction guidance information acquisition unit 35 performs processing that extracts and acquires from the direction guidance data base 3 the direction guidance information 7 that is associated with the information on the designated branching point 42 and the approach road 43 to the branching point 42.

In the example shown in FIG. 6, as explained previously, the branching point designation unit 32 designates the intersection of National Route 254 and National Route 17 as the branching point 42 and designates the portion of National Route 254 that leads to the branching point 42, which is the portion of National Route 254 that is below National Route 17 on the map, as the approach road 43. Therefore, the direction guidance information acquisition unit 35 extracts and acquires from the direction guidance data base 3 the direction guidance information 7 that is image information of the same sort as a direction guidance sign that is installed at the intersection where National Route 254 and National Route 17 intersect, as shown in FIG. 3A, for example.

### 12. History guidance information acquisition unit

A history guidance information acquisition unit 36 functions as a history guidance information acquisition unit that acquires at least one item of the history guidance information 9 that provides guidance for a guidance object 41 that corresponds to the history information 8 that is extracted by history information extraction unit 33. In the present embodiment, the history guidance information 9 is defined as symbol image information that expresses a name, an attribute, or the like of the guidance object 41. That is, in a case where the guidance object 41 is a location, the history guidance information 9 is a symbol image that expresses a name, an attribute, or the like of a facility, a shop, or the like that exists at the location, and the history guidance information 9 is the same sort of symbol image as the symbol image that is described by the symbol image information 6 that is stored in the map data base 2. Further, in a case where the guidance object 41 is a road, the history guidance information 9 is a symbol image that describes the road and is the same sort of symbol image as the symbol image that expresses the road name and is contained in the map information 5 that is stored in the map data base 2. Accordingly, the history guidance information acquisition unit 36 performs processing that acquires the symbol image information for each location and road that is contained in at least one item of the history information 8 that is extracted by the history information extraction unit 33. The processing then defines the acquired symbol image as the history guidance information 9. In performing the processing, the history guidance information acquisition unit 36 does not acquire the history guidance information 9 for the history information 8 that has been excluded by the exclusion processing portion 34.

In the example shown in FIG. 6, the history information extraction unit 33 does not extract the history information 8 for the direction straight ahead, but does extract the location history information 8A for the locations A, B and E in the right turn direction, the location history information 8A for the locations C and D in the left turn direction, and the road history information 8B for Prefectural Route 48 (the road) in the left turn direction. Further, the exclusion processing portion 34 performs the processing that excludes, from the history information 8 for the guidance objects 41 that is extracted by the history information extraction unit 33, the location history information 8A for the locations D and E. Therefore, the history guidance information acquisition unit 36 treats the location history information 8A for the locations A and B in the right turn direction, the location history information 8A for the location C in the left turn direction, and the road history information 8B for Prefectural Route 48 (the road) in the left turn direction as the extracted history information 8 and acquires the history guidance information 9 that provides guidance for the guidance objects 41 that correspond to the extracted history information 8. Specifically, for the location A, the history guidance information acquisition unit 36 acquires information on a symbol image of the letter "A" enclosed within a square, which is contained in the location history information 8A for "Department store A", shown in FIG. 4A. The history guidance information acquisition unit 36 then defines the symbol image as the history guidance information 9 for the location A. For the location B, the history guidance information acquisition unit 36 acquires information on a symbol image of the letter "B" enclosed within a circle, which is contained in the location history information 8A for "Store B", shown in FIG. 4A. The history guidance information acquisition unit 36 then defines the symbol image as the history guidance information 9 for the location B. For the location C, the history guidance information acquisition unit 36 acquires information on a symbol image of the letter "C" enclosed within a diamond shape, which is contained in the location history information 8A for "Shop C", shown in FIG. 4A. The history guidance information acquisition unit 36 then defines the symbol image as the history guidance information 9 for the location C. For the Prefectural Route 48 (the road), the history guidance information acquisition unit 36 acquires information on a symbol image of the number 48 enclosed within a double hexagonal shape, which is contained in the road history information 8B for Prefectural Route 48, shown in FIG. 4B. The history guidance information acquisition unit 36 then defines the symbol image as the history guidance information 9 for Prefectural Route 48.

### 13. Guidance information combining portion

A guidance information combining portion 37 functions as a guidance information creation unit that creates the guidance information 10 by combining the direction guidance information 7 that has been acquired by the direction guidance information acquisition unit 35 with at least one item of the history guidance information 9 that has been acquired by the history guidance information acquisition unit 36. The guidance information combining portion 37 performs processing that takes the history guidance information 9 for the locations and roads that serve as the guidance objects 41 and combines it with the direction guidance information 7 such that it is associated with the directions in the direction guidance information 7. More specifically, the guidance information combining portion 37 takes the history guidance information 9 for the locations and roads that serve as the guidance objects 41 and arranges and combines it with the direction guidance information 7 such that it is associated with the directions in which it is possible to proceed from the designated branching point 42 that are indicated by the direction guidance information 7 and such that it indicates the directions in which the locations and roads that serve as the guidance objects 41 exist. In the course of this processing, the history guidance information 9 for the locations and roads that serve as the guidance objects 41 is arranged in positions that correspond to the arrows (refer to FIG. 3) that are contained in the direction guidance information 7 and that indicate the directions in which it is possible to proceed from the designated branching point 42, as shown in FIG. 2, for example.

In the example shown in FIG. 6, as explained previously, the direction guidance information acquisition unit 35 acquires, as the direction guidance information 7, image information for the designated branching point 42 of the same sort as the direction guidance sign that is shown in FIG. 3A. Further, the history guidance information acquisition unit 36 acquires, as the history guidance information 9, the symbol images for the location A and the location B in the right turn direction from the designated branching point 42 and the symbol images for the location C and Prefectural Route 48 (the road) in the left turn direction. Note that in this example, the history guidance information 9 is not acquired for the direction straight ahead from the designated branching point 42. Therefore, the guidance information combining portion 37 combines the direction guidance information 7 and a plurality of items of the history guidance information 9 to create the guidance information 10 as shown in FIG. 2. Specifically, the guidance information combining portion 37 combines the information in such a way that the history guidance information 9 that is the symbol images for the location A and the location B is placed in the vicinity of the tip of the arrow contained in the direction guidance information 7 that points in the right turn direction (toward Sugamo). Further, the guidance information combining portion 37 combines the information in such a way that the history guidance information 9 that is the symbol images for the location C and Prefectural Route 48 is placed in the vicinity of the tip of the arrow contained in the direction guidance information 7 that points in the left turn direction (toward Nihonbashi). In this process, in the example shown in FIG. 2, the history guidance information 9 for Prefectural Route 48 is placed in front of the tip of the arrow that points in the left turn direction in order to indicate that it is providing guidance for an intersecting road at an intersection that will lie ahead of the vehicle after the vehicle turns left. By contrast, the history guidance information 9 for the locations A to C is placed alongside the right turn arrow and the left turn arrow (below the arrows in FIG. 2) in order to indicate that the locations A to C exist along the road on which the vehicle will travel after turning right or left. In the present embodiment, the guidance information 10 that is created by the guidance information combining portion 37 is superimposed on the map image 13 and displayed on the display device 14, as shown in FIG. 5.

Displaying the guidance information 10 on the display device 14 in this manner makes it possible to provide guidance in the form of both the direction guidance information 7 and the history guidance information 9. The direction guidance information 7 provides guidance on the directions in which it is possible for the vehicle to proceed from the branching point 42 (refer to FIG. 6) that exists in the direction in which the current position display 45 is proceeding. The history guidance information 9 provides guidance on the guidance objects 41 that exist in each direction, in association with each direction in the direction guidance information 7. Further, the objects of the guidance that is provided in the form of the history guidance information 9 are information on the guidance objects 41 that the history information acquisition unit 31 acquires from the records of the navigation operations and that are extracted from the history data base 4, where they are stored as the history information 8. Accordingly, it is possible to inhibit the display of more than the necessary number of the guidance objects 41 for which guidance is provided in association with each direction in the direction guidance information 7. This makes it possible to provide guidance only for the guidance objects 41 that the user of the navigation device 1 can easily recognize based on past experience. Therefore, in a case where the vehicle proceeds in any of the directions in which it is possible to proceed from the branching point 42 that exists in the direction in which the current position display 45 is proceeding, it is possible to make it easy for the user to recognize what sorts of the guidance objects 41 exist in the direction in which the vehicle is proceeding.

In the present embodiment, the direction guidance information acquisition unit 35, the history guidance information acquisition unit 36, and the guidance information combining portion 37 are configuring elements of a guidance information generation unit 38. Along with the display device 14 that displays and outputs the guidance information 10 that is generated by the guidance information generation unit 38, the guidance information generation unit 38 is a configuring element of the guidance information output unit 11. That is, the guidance information generation unit 38 generates the guidance information 10, which includes the direction guidance information 7 that provides guidance on the directions in which it is possible to proceed from the designated branching point 42 and the history guidance information 9 that provides guidance on the guidance objects 41 that are associated with each direction in the direction guidance information 7 and that correspond to the history information 8 that is extracted by the history information extraction unit 33. The display device 14 displays the guidance information 10.

### 14. Guidance processing procedure

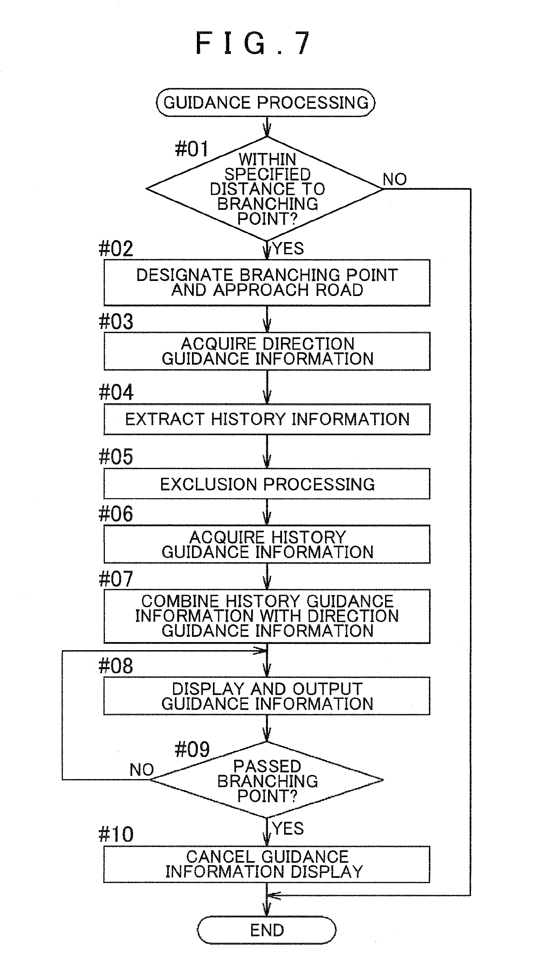

Next, a procedure for guidance processing that is executed in the navigation device 1 according to the present embodiment will be explained. FIG. 7 is a flowchart that shows the overall procedure for the guidance processing according to the present embodiment. The procedure for the guidance processing that is explained below is executed by one of hardware, software (a program), and a combination of both hardware and software that configure the various portions of the navigation device 1. In a case where the various portions of the navigation device 1 are configured from a program, the computation processing device that is included in the navigation device 1 operates as a computer that executes the navigation program that configures the various portions of the navigation device 1.

As shown in FIG. 7, in the guidance processing according to the present embodiment, first, the branching point designation unit 32 determines whether or not the current position that is acquired by the current position information acquisition unit 16 is within the specified guidance distance L (refer to FIG. 6) from the branching point 42 that exists in the direction in which the vehicle is proceeding (step #01). As explained previously, this determination processing is performed in a case where the branching point 42 exists in the direction in which the vehicle is proceeding and is based on the map information 5 that is acquired from the map data base 2 and on the current position, on the map that is indicated in the map information 5, that is acquired by the current position information acquisition unit 16. In a case where the branching point 42 does not exist within the guidance distance L from the current position in the direction in which the vehicle is proceeding (NO at step #01), the guidance processing ends. In a case where the distance from the current position to the branching point 42 is not greater than the guidance distance L (YES at step #01), the branching point designation unit 32 designates the branching point 42 that exists in the direction in which the vehicle is proceeding as the branching point 42 and designates the road 43 on which the vehicle is proceeding toward the branching point 42 as the approach road 43 to the branching point 42 (step #02).

Next, based on information on the branching point 42 and the approach road 43 to the branching point 42 that were designated at step #02, the direction guidance information acquisition unit 35 acquires from the direction guidance data base 3 the direction guidance information 7 that provides guidance on the directions in which it is possible to proceed from the branching point 42 (step #03). Then, based on the information on the branching point 42 and the approach road 43 to the branching point 42 that were designated at step #02, the history information extraction unit 33 extracts from the history data base 4 at least one item of the history information 8 that pertains to the locations and the roads that are the guidance objects 41 that exist in the various directions in which it is possible to proceed from the branching point 42 (step #04). After that, the exclusion processing portion 34 performs the exclusion processing that excludes, from the at least one item of the history information 8 that was extracted at step #04, the history information 8 for the guidance objects 41 that, because of the road configuration, are difficult to reach even if the vehicle proceeds in the directions of the guidance objects 41 (step #05).

Next, the history guidance information acquisition unit 36 acquires the history guidance information 9 that provides guidance for the guidance objects 41 that correspond to the history information 8 that was extracted at step #04 and that remains after the exclusion processing that was performed at step #05 (step #06). As explained previously, in the present embodiment, the history guidance information 9 is information on symbol images for the various locations and roads that are contained in the history information 8 that was extracted at step #04 and that remains after the exclusion processing that was performed at step #05. Then, the guidance information combining portion 37 creates the guidance information 10 by combining the history guidance information 9 that was acquires at step #06 with the direction guidance information 7 that was acquired at step #03 (step #07). By this process, the guidance information 10 is created in the form of image information in which the history guidance information 9 for the locations and the roads that serve as the guidance objects 41 is placed in positions that correspond to the arrows that are contained in the direction guidance information 7 and that indicate the various directions in which it is possible to proceed. Next, the navigation computation portion 20, in accordance with the display program 21, outputs and displays on the display device 14 the guidance information 10 that was created at step #07 (step #08). In the present embodiment, the guidance information 10 is superimposed on the map image 13 and displayed, as shown in FIG. 5.

Next, the navigation computation portion 20, in accordance with the display program 21, maintains the output and display of the guidance information 10 on the display device 14 as long as the vehicle does not pass the branching point 42 (NO at step #09). Once the vehicle has passed the branching point 42 (YES at step #09), the navigation computation portion 20, in accordance with the display program 21, clears the display of the guidance information 10 from the display device 14 (step #10). Then the procedure for the guidance processing that is executed in the navigation device 1 ends.

### 15. Procedure for history information collection processing

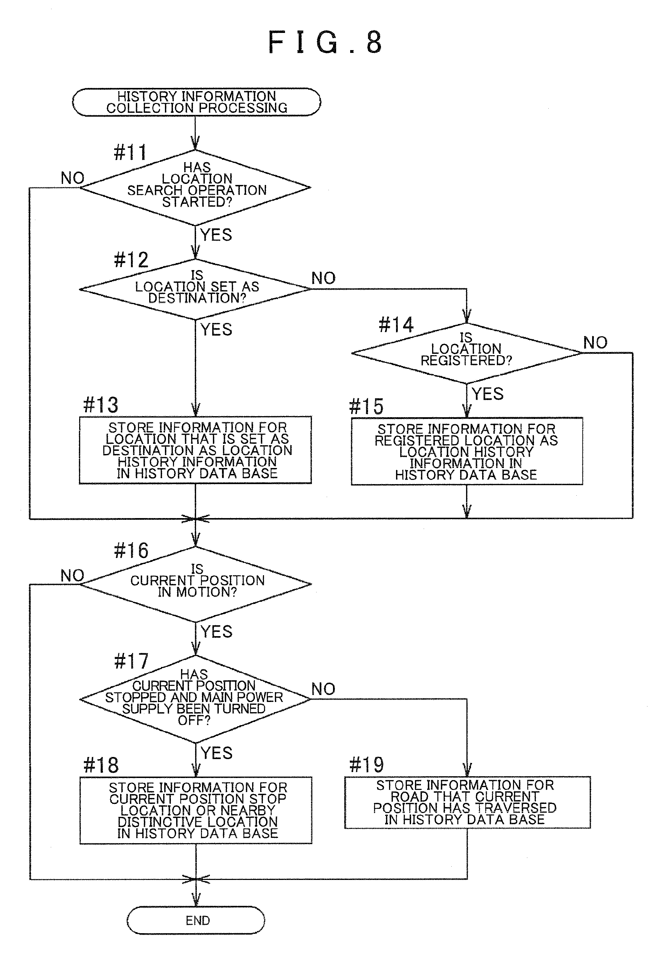

Next, a procedure for history information collection processing that is executed in the navigation device 1 according to the present embodiment will be explained. FIG. 8 is a flowchart that shows the procedure for the history information collection processing according to the present embodiment. The procedure for the history information collection processing that is explained below is mainly executed by the history information acquisition unit 31. As explained previously, the history information acquisition unit 31 is configured from one of hardware, software (a program), and a combination of hardware and software. In a case where the history information acquisition unit 31 is configured from a program, the computation processing device that is included in the navigation device 1 operates as a computer that executes the program that configures the history information acquisition unit 31.

As shown in FIG. 8, in the history information collection processing according to the present embodiment, first, the history information acquisition unit 31 determines whether or not the navigation computation portion 20 has started a location search operation (step #11). The location search operation may be any one of various types of operations that search for a location. It may be an operation in which the navigation computation portion 20, in accordance with the search program 25, searches for a desired location according to various types of search conditions that are input, an operation in which the user searches for a desired location in the map image 13 by scrolling the map image 13 in accordance with an operation input, or the like. In a case where the navigation computation portion 20 has not started the location search operation (NO at step #11), the processing proceeds to step #16. On the other hand, in a case where the navigation computation portion 20 has started the location search operation (YES at step #11), the processing proceeds to step #12. In a case where the location that is being sought has been set as the destination (YES at step #12), the history information acquisition unit 31 acquires information for the location that has been set as the destination, such as a location name, a symbol image, a position, a registration date, and the like, and stores the information in the history data base 4 as the location history information 8A (step #13). On the other hand, in a case where the location that is being sought has not been set as the destination (NO at step #12), but the location has been registered as a registered location (YES at step #14), the history information acquisition unit 31 acquires information for the registered location, such as a location name, a symbol image, a position, a registration date, and the like, and stores the information in the history data base 4 as the location history information 8A (step #15). By executing steps #11 to #15, the history information acquisition unit 31 acquires, as the location history information 8A, the information on the location that has been set as the destination and on the registered location, based on the search records for the locations.

Next, the history information acquisition unit 31 determines whether or not the current position is in motion, based on the current position information that is acquired by the current position information acquisition unit 16 (step #16). In a case where the current position is not in motion, that is, in a case where the current position is stopped (NO at step #16), the processing ends. On the other hand, in a case where the current position is in motion (YES at step #16), the processing determines whether or not the current position then stops and whether or not the main power supply of the navigation device 1 is turned off (step #17). The determination processing is processing that determines that the current position (the vehicle) has arrived at the location where it is stopped by determining that the current position has been stopped for at least a fixed length of time. It is preferable for the main power supply of the navigation device 1 to be a power supply that operates in conjunction with the main power supply of the vehicle. In a case where the current position has stopped and the main power supply of the navigation device 1 has been turned off (YES at step #17), it can be determined that the current position has actually arrived at one of the stop location and a location in the vicinity. Accordingly, the history information acquisition unit 31 stores in the history data base 4, as the location history information 8A, information on the location where the current position is stopped or on a distinctive location in the vicinity, such as a location name, a symbol image, a position, a registration date, and the like (step #18). In a case where the location where the current position is stopped matches a location where a facility, a shop, or the like exists, the history information acquisition unit 31 treats the information on the location where the current position is stopped as the location history information 8A. On the other hand, in a case where the location where the current position is stopped does not match a location where a facility, a shop, or the like exists, the history information acquisition unit 31 takes the information on the location of a facility, a shop, or the like that exists in the closest proximity to the location where the current position is stopped and treats that information as the location history information 8A. Thus, based on the travel history of the current position, the history information acquisition unit 31 acquires, as the location history information 8A, the information on one of the location to which the vehicle has actually gone and a distinctive location in the vicinity of the location to which the vehicle has actually gone.

On the other hand, in a case where the current position has not stopped or the main power supply of the navigation device 1 has not been turned off (NO at step #17), the processing can determine that the current position continues to be in motion. Accordingly, the history information acquisition unit 31 acquires, as the road history information 8B, information on the road that the current position has traversed, such as the road name, a symbol image, information on a position that indicates the road segment that the current position has actually traversed, a registration date, and the like, and stores it in the history data base 4 (step #19). Thus, based on the travel history of the current position, the history information acquisition unit 31 acquires, as the road history information 8B, the information on the road that the vehicle has actually traversed.

### 16. Other embodiments

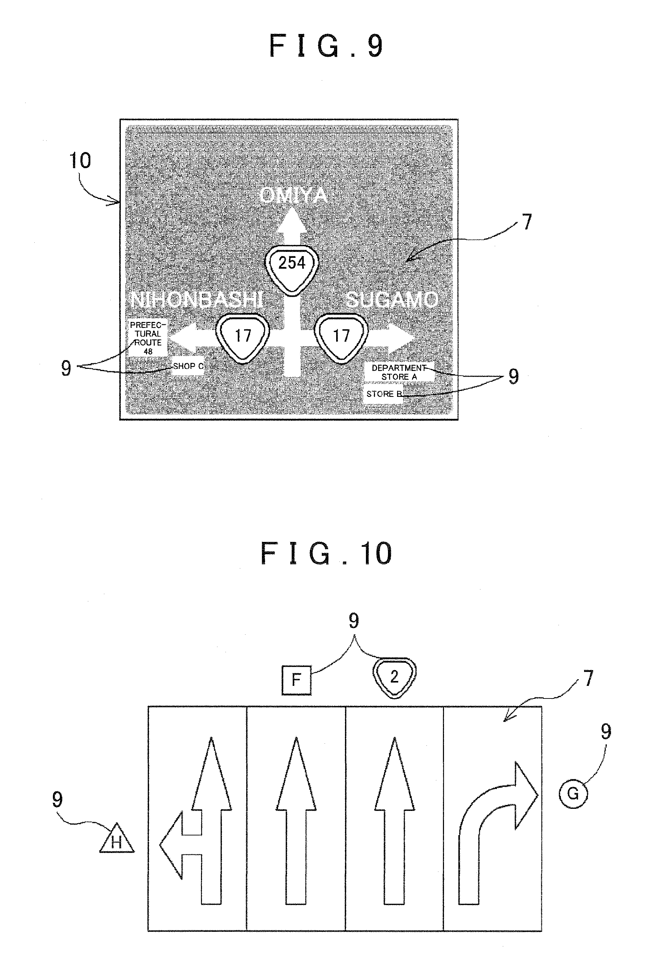

(1) In the embodiment described above, an example was explained in which the history guidance information 9 is a symbol image that expresses a name, an attribute, or the like of the guidance object 41. However, a specific example of the history guidance information 9 according to the present invention is not limited to this example. Therefore, in another preferred embodiment of the present invention, the history guidance information 9 includes text information that expresses a name, an attribute, or the like of the guidance object 41, as shown in FIG. 9, for example. FIG. 9 shows an example of the guidance information 10 that expresses the same content as does the guidance information 10 according to the embodiment described above, as shown in FIG. 2, but in which the history guidance information 9 is in the form of text information instead of a symbol image. That is, in the example in FIG. 9, the text information that expresses the names, the attributes, and the like of the guidance objects 41 has been made the history guidance information 9, such that instead of the symbol images for the locations A to C and Prefectural Route 48 (the road), the texts "Department store A", "Store B", "Shop C", and "Prefectural Route 48" are displayed. Furthermore, the history guidance information 9 in text form is combined with the direction guidance information 7 as in the embodiment described above, such that the history guidance information 9 is placed in positions that correspond to the arrows that indicate the various directions that are contained in the direction guidance information 7. Note that it is preferable for the symbol images and the text information from which the history guidance information 9 is configured to be made information that expresses only one of the name and the attribute of the guidance object 41.

(2) In the embodiment described above, as shown in FIGS. 2 and 3, the direction guidance information 7 that is a configuring element of the guidance information 10 was explained using an example of image information of the same sort as a direction guidance sign that is installed at an actual branching point. However, the specific form of the direction guidance information 7 according to the present invention is not limited to this example. Therefore, in another preferred embodiment of the present invention, the direction guidance information 7 is image information for lane guidance that provides guidance on the directions in which it is possible to proceed in each lane of the approach road to the branching point, as shown in FIG. 10, for example. In this case, the direction guidance information 7 is created by reading, from the map information 5 that is stored in the map data base 2, information on the number of lanes in the approach road just before the branching point and information on the directions in which it is possible to proceed in each lane. It is preferable for the image information for the lane guidance that is used as a plurality of items of the direction guidance information 7 also to be organized and stored in the direction guidance data base 3 in association with information on the branching points (that is, the nodes) and the approach roads to the branching points (that is, the links) in the map information 5. Furthermore, in the example shown in FIG. 10, the history guidance information 9 for the locations and roads that serve as the guidance objects 41 is combined with the direction guidance information 7 and placed outside of and adjacent to the frame that corresponds to each of the lanes for which the lane guidance is provided, in such a way that the history guidance information 9 indicates the directions where the locations and roads that serve as the guidance objects 41 exist. The positions in which the history guidance information 9 for the locations and roads that serve as the guidance objects 41 is placed, in relation to the frames that correspond to the various lanes for which the lane guidance is provided, are adjacent to the directions where the locations and roads that serve as the guidance objects 41 exist. The example of the guidance information 10 that is shown in FIG. 10 indicates that a location F and National Route 2 (a road) exist in the direction straight ahead from the branching point, that a location G exists in the right turn direction, and that a location H exists in the left turn direction.

(3) In the embodiment described above, as an example, a case was explained in which the guidance objects 41 are both locations and roads on the map. However, the specific examples of the guidance objects 41 according to the present invention are not limited to these examples. Therefore, in another preferred embodiment of the present invention, the guidance objects 41 are one of locations and roads on the map, for example. In another preferred embodiment of the present invention, the guidance objects 41 are limited to locations where a specific type of facility, shop, or the like exists. In another preferred embodiment of the present invention, the guidance objects 41 are objects other than locations and roads, such as defined areas, administrative districts, and the like, for example.

(4) In the embodiment described above, as an example, a case was explained in which the history information acquisition unit 31 acquires, as the history information 8, information from the records of the navigation operations, specifically the travel history of the current position and the search records for the locations. The information that the history information acquisition unit 31 acquires includes the locations that have been set as destinations, the registered locations, the locations to which the vehicle has actually gone, the distinctive locations in the vicinity of the locations to which the vehicle has actually gone, and the roads that the vehicle has actually traversed. However, the types of the guidance objects 41 that the history information acquisition unit 31 acquires as the history information 8 are not limited to these examples. Therefore, in another preferred embodiment of the present invention, for example, the information that the history information acquisition unit 31 acquires from the records of the navigation operations and configures as the history information 8 is one of one of and some of the locations that have been set as destinations, the registered locations, the locations to which the vehicle has actually gone, the distinctive locations in the vicinity of the locations to which the vehicle has actually gone, and the roads that the vehicle has actually traversed. In this case, it is desirable, for example, for the history information acquisition unit 31 to acquire and configure as the history information 8 the information on the locations that have been set as destinations and the registered locations, based on the location search records among the records of the navigation operations. It is also desirable, for example, for the history information acquisition unit 31 to acquire and configure as the history information 8 the information on the locations to which the vehicle has actually gone, the distinctive locations in the vicinity of the locations to which the vehicle has actually gone, and the roads that the vehicle has actually traversed, based on the travel history of the current position among the records of the navigation operations.

(5) In the embodiment described above, as an example, a case was explained in which the navigation device 1 includes the exclusion processing portion 34, which performs the processing that, from among the history information 8 that the history information extraction unit 33 has extracted, excludes the history information 8 for the guidance objects 41 that, based on the configuration of the roads, are difficult to reach even if the vehicle proceeds in the directions of the guidance objects 41. However, in another preferred embodiment of the present invention, the navigation device 1 according to the present invention is configured such that it does not include the exclusion processing portion 34. In this case, the history guidance information acquisition unit 36 acquires the history guidance information 9 for all of the history information 8 that the history information extraction unit 33 has extracted, and the guidance information combining portion 37 creates the guidance information 10 that includes the history guidance information 9.

(6) In the embodiment described above, as an example, a case was explained in which the branching point designation unit 32 designates the branching point 42 that exists in the direction in which the vehicle is proceeding as the branching point 42 and designates the road 43 on which the vehicle is proceeding toward the branching point 42 as the approach road 43 to the branching point 42 (refer to FIG. 6). However, the embodiments of the present invention are not limited to this example. Therefore, it is possible to configure the navigation device 1 according to the present invention such that, for example, the branching point designation unit 32 designates a specific branching point, such as on a guided route that is distant from the current position, in the vicinity of the destination, or the like, and designates an approach road to the branching point. The navigation device 1 can then display the guidance information 10 for the branching point and the approach road to the branching point on the display device 14.

(7) In the embodiment described above, as an example, a case was explained in which the guidance information 10 is image information that is output to the display device 14. However, the embodiments of the present invention are not limited to this example. Therefore, in another preferred embodiment of the present invention, the navigation device 1 is configured such that the guidance information 10 that includes the direction guidance information 7 and the history guidance information 9 is audio information and is output to the audio output device 15, for example. Even in this case, the guidance information output unit 11 outputs both the direction guidance information that provides guidance on the directions in which it is possible to proceed from the designated branching point and the history guidance information that provides guidance on the guidance objects that correspond to the extracted history information and that is associated with the various directions in the direction guidance information. Specifically, it is preferable for the guidance information output unit 11 to be configured such that the guidance information 10 that it outputs is audio information that says, for example, "At the intersection 50 meters ahead, turn right to go to department store A and store B, and turn left to go to shop C and Prefectural Route 48.''

(8) In the embodiment described above, as an example, a case was explained in which the navigation device 1 is installed in a vehicle and used. However, the uses of the navigation device 1 according to the present invention are not limited to use in a vehicle. Therefore, the present invention can preferably be used for a portable navigation device and the like.

The present invention can preferably be used as a navigation device and a navigation program that have a function that provides guidance at a branching point in a road as to a direction in which it is possible to proceed from the branching point.

## Claims

1. A navigation device that performs a specified navigation operation based on map information, comprising:
a history information storage unit that stores information on a guidance object as history information, the information on the guidance object being acquired from a record of the navigation operation;
a history information extraction unit that, when a branching point in a road and an approach road to the branching point have been designated, extracts from the history information storage unit the history information for the guidance object that exists in a direction in which it is possible to proceed from the branching point; and
a guidance information output unit that outputs direction guidance information that provides guidance on a direction in which it is possible to proceed from the branching point and outputs history guidance information that, in association with the direction in the direction guidance information, provides guidance for the guidance object that corresponds to the extracted history information.

2. The navigation device according to claim 1, wherein
the guidance object is at least one of a location and a road on a map.

3. The navigation device according to either one of claim 1 or claim 2, wherein
the information on the guidance object that is acquired from the record of the navigation operation is at least one of a location that has been set as a destination, a registered location, a location to which the navigation device has actually gone, a distinctive location in the vicinity of a location to which the navigation device has actually gone, and a road that the navigation device has actually traversed.

4. The navigation device according to any one of claims 1 to 3, wherein
the record of the navigation operation is at least one of a travel record for the navigation device and a location search record.

5. The navigation device according to any one of claims 1 to 4, wherein
the history guidance information is information that indicates at least one of a name and an attribute of the guidance object.

6. The navigation device according to any one of claims 1 to 5, wherein
the direction guidance information is image information that indicates by an arrow the direction in which it is possible to proceed from the branching point, and
the history guidance information is one of a symbol image and text information that indicates the guidance object and that is placed in a position that corresponds to the arrow for the direction in the direction guidance information.

7. The navigation device according to any one of claims 1 to 6, wherein
the direction guidance information is one of image information of the same sort as a direction guidance sign that is installed at an actual branching point and lane guidance image information that provides guidance on the directions in which it is possible to proceed in each lane before the branching point.

8. The navigation device according to any one of claims 1 to 7, further comprising:
an exclusion unit that, based on a configuration of a road that extends from the branching point, excludes, from the history information for the guidance objects that exist in a direction in which it is possible to proceed from the branching point, the history information for a guidance object that is difficult to reach even if the navigation device proceeds in the direction of the guidance object.

9. The navigation device according to any one of claims 1 to 8, further comprising:
a current position information acquisition unit that acquires current position information,
wherein
the navigation device, based on a current position in the current position information, designates a branching point that exists in a direction in which the current position is proceeding on a map that is indicated in the map information as the branching point and designates a road on which the current position is proceeding toward the branching point as the approach road to the branching point.

10. A navigation program comprising instructions that cause a computer to perform a specified navigation operation based on map information, the navigation operation including the steps of:
storing information on a guidance object as history information in a history information storage unit, the information on the guidance object being acquired from a record of the navigation operation;
extracting from the history information storage unit, when a branching point in a road and an approach road to the branching point have been designated, the history information for the guidance object that exists in a direction in which it is possible to proceed from the branching point; and
outputting direction guidance information that provides guidance on a direction in which it is possible to proceed from the branching point and history guidance information that, in association with the direction in the direction guidance information, provides guidance for the guidance object that corresponds to the extracted history information.

11. The navigation program according to claim 10, further comprising instructions that cause a computer to perform a step of:
excluding from the history information for guidance objects that exist in a direction in which it is possible to proceed from the branching point, based on a configuration of a road that extends from the branching point and a direction in which a current position is proceeding, the history information for a guidance object that is difficult to reach even if the navigation device proceeds in the direction of the guidance object.
